# EUROPEAN PATENT SPECIFICATION

(11) **EP 3 545 802 B1**
(45) Date of publication and mention of the grant of the patent: **07.04.2021**
(21) Application number: 18465509.0
(22) Date of filing: 30.03.2018
(51) Int. Cl.: A47J 37/04

(54) **FOOD IMPALING AND FIXING DEVICE FOR PREPARING PURPOSES**
VORRICHTUNG ZUM AUFSPIESSEN UND FIXIEREN VON NAHRUNGSMITTELN FÜR ZUBEREITUNGSZWECKE
EMPALEUR D'ALIMENTS ET DISPOSITIF DE FIXATION POUR LA PRÉPARATION

(43) Date of publication of application: 02.10.2019
(73) Proprietor: Vandamme, Paul, 030772 Bucharest (RO); De Groen, Johannes Theodorus Maria, 3842 DR Harderwijk (NL)
(72) Inventor: Vandamme, Paul, 030772 Bucharest (RO); De Groen, Johannes Theodorus Maria, 3842 DR Harderwijk (NL)
(74) Representative: Ohan, Petre

(56) References cited:
- GR-A- 20110 100 455
- US-A- 5 113 699
- US-A- 5 445 063
- US-A- 5 460 080
- US-A1- 2012 167 783

## Description

The invention refers to a meat perforating and fixing device allowing its preparing for consumption. Within this invention, by preparing it is understood both roasting/baking as well as smoking or steaming of meat. Although the devise is preferably used for meat preparation, it may be used in the same way for vegetables and fruits, for adequate/corresponding preparations, for example baking. According to invention, the device may be used both as domestic, kitchen instrument as well as within the field of public food service.

From the patent literature, is known the invention US No. 5 460 080 from Oct. 24.1995 entitled "Mobile rotisserie for mass cooking of edible vertebrate products" which discloses a mobile rotisserie for mass cooking of edible vertebrate products, characterized by a wheel-mounted, open pit wherein a spit conveyor travels from end to end and plural spits engage the conveyor, the spits being rapidly rotated simultaneously as they travel the length of the rotisserie unit. Cooking products are removably impaled while being releasibly compressed on the spits by retainer and strap assemblies, each of which is held upon traveling rods, the latter of which engage the spit conveyor. The travelling spit rods and rotary spits, per se, are removable during operation and successively transportable with the cooked product from the rotisserie.

Each rotary chicken spits includes a rotatable travel rods having Z-bars, effectively aligned tines welded on it, a plural product retainers fixed to the travel rods, said retainers including fixed spreader bars with aligned spreader bar tines and upstanding hooks at ends thereof, a shiftable resilient straps engaging each bar at ends thereof, each said strap having a hook end and a free end, the hook end interlocking with upstanding hook of respective spreader bars.

The technical issue solved by invention consists in both fixing as well as easy and quick release of the meat on/from a rotating jag.

According to the invention, the food impaling and fixing device for preparation purposes contains a clap-fork equipped on a side with multiple teeth parallelly aligned on it. On end of the clap-fork is permanently or temporarily mounted on a rotating jag on which the products to be prepared are strung, by means of connecting arm (4), hinged by it by using an axis, so that it may rotate around this axis. The other end of the clap-fork is equipped with a spacer ended with a positioning element leaning on the jag when the clap-fork is closed and an orifice/hole, through this said orifice a ring from the end of a coiled immobilizing spring_is inserted and the other end is inserted on the peak of the jag.

The following advantages are obtained as a result of using the invention:
- both easy and quick positioning as well as fixing of food (for example meat, especially poultry meat/chicken) on a rotating jag/spit, for cooking/preparing purposes.
- the device allows also the release of the meat from the jag (8), under the same conditions, after preparation.

Below there are some embodiments of the invention in connection to figures 1 - 12 representing:
- Fig.1, blade with multiple teeth, named clap-fork, of the device according to invention without rotating jag;
- Fig.2, food impaling and fixing device for cooking/preparing or smoking purposes, according to invention, in closed position;
- Fig.3, details of the rear part of device, according to invention, presenting the fixed assembly of the clap-fork on the rotating jag;
- Fig.4a, 4b, details of the rear part of device, according to invention, presenting the sliding assembly of the clap-fork on the rotating jag;
- Fig.5a, 5b, detail of different root shapes of the clap-fork's teeth;
- Fig.6 presents versions of cross-sections of the clap-fork's teeth;
- Fig.7a, 7b, 7c present different possible shapes of the positing element of the clap-fork's spacer;
- Fig.8a, 8b present different shapes of the cavity of the slider of connecting arm;
- Fig.9 presents another version of executing the slider of the connecting arm;
- Fig.10 presents another embodiment of the clap-fork, which may be smaller than the rotating jag;
- Fig.11 presents the device according to invention, open, in course of being loaded with chicken;
- Fig.12 presents the device according to invention, closed and shows how the meat is fixed for the purpose of being prepared.

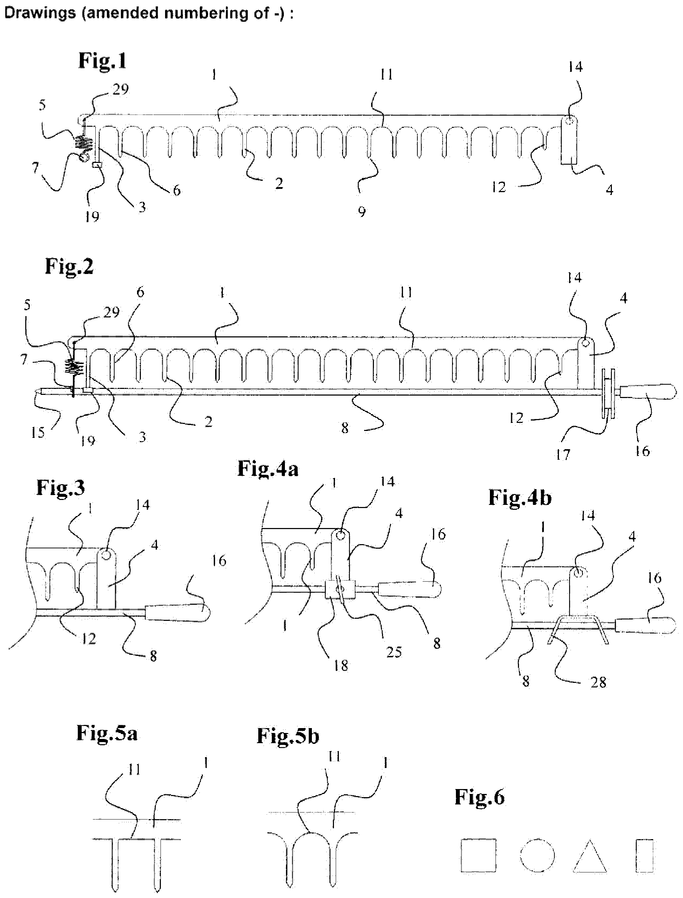

With reference to **fig.1**, it presents a blade/plate having an elongated rectangular shape, equipped on one large sides with multiple teeth 2, 6, 12, hereinafter referred to as clap-fork 1.

With reference to **fig.1 and 2**, the food impaling and fixing device for preparation purposes, according to invention, contains the clap-fork 1 equipped on a side with multiple teeth 2,6,12 parallelly aligned on it. One end of the clap-fork 1 is permanently or temporarily (by sliding) mounted on a rotating jag 8 by means of a connecting arm 4. The rotating jag 8 is a rod or pipe, slightly longer than the clap-fork 1 and has a square section or a section having any other geometric shape. At the end having the connecting arm mounted, it is equipped with a supporting/driving roll 17 and a handle 16 made of a thermal insulating material. The other end is equipped with a peak 15 having a pyramidal shape. On the rotating jag 8, the products to be prepared are strung. The peak 15 and the supporting/driving roll 17 allow the jag 8 and the entire device to be driven in a rotational movement around the jag's axis, during the process of preparing the food. The clap-fork 1 is hinged by connecting arm 4 using an axis 14, so that it may rotate around this axis. At the other end, the clap-fork 1 is equipped with a spacer 3 ended with a positioning element 19, leaning on the jag 8, when the clap-fork 1 is closed and an orifice/hole 29 used for inserting a ring from the end of a coiled spring 5. The peak of the jag 8 is inserted through the other end 7.

The connecting arm 4 of the clap-fork 1 may be permanently fixed on the jag 8 (fig. 2 and **fig.3**), for example, by welding or as indicated in **fig.4a)** and **4b****)**, it may be mounted through a slider 18 or 28 respectively, existing on the fastening end of the connecting arm 4. The jag 8 is a rod having a circular or polygonal, preferably square.

Fig.3 illustrates a detail of the rear part of the device, according to invention, where the clap-fork is fixed mounted on the rotating jag, for example by welding the connecting arm 4 to jag 8.

Fig.4a, 4b illustrate details of the rear part of the device, according to invention, highlighting the sliding mounting of the clap-fork 1 on the rotating jag 8 by means of some sliders 18, 28, which can be made in two variants.

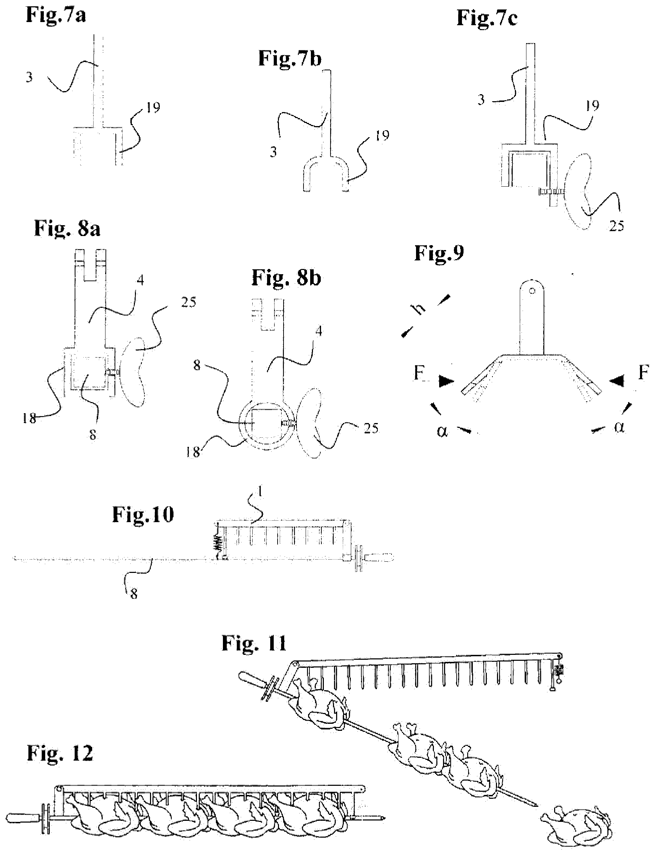

With respect to the number of teeth of the clap-fork, it must be established so that at least one tooth 2 per piece of meat is guaranteed, preferably, 4 centimetres between two consecutive teeth; As far as the length of the teeth 2 of the fork-flaps 1 is concerned, it must be less than the height of the connecting arm 4, so that the teeth do not touch the rotating jag 8. The height of connecting arm 4 is established depending on the thickness of the piece of meat to be inserted between the rotating jag 8 and the root of teeth 11. The last tooth 12 of the clap-fork 1 is, preferably, smaller than all other teeth, in order to facilitate penetration and to reduce the efforts for this tooth 12 during penetration and fixing of meat;
The cross-section of a clap-fork's tooth **Fig.6** may have a square, rectangular, round, oval, triangular shape or any other known polygonal shape or closed curve; The end 9 of each tooth 6, 2, 12 of the clap-fork 1 is sharpened, preferably having a sharp edge for a better penetration;
The root of tooth 11 or the portion between two neighbouring teeth may be straight, as in **fig.5a****)**, but is preferably oval, as in **fig.5b****)**, for a better cleaning;
When poultry, such as chickens, are used, the teeth of clap-fork will penetrate and fix the birds, preferably, in their chest, as shown in **fig.11** and **12**;
The teeth, preferably, are aligned in the same plane and positioned parallel to one another; Via pivoting axis 14, the clap-fork 1 is mounted on the connecting arm 4 and can rotate about the pivot axis 9 parallel to the plane corresponding with the clap-fork's 1 teeth alignment;
The clap-fork 1 (together with teeth 2, 6, 12 and the spacer 3), preferably, is made of a single piece/metal plate; if the plate from which the clap-fork1 is made, has a thickness less than 2 mm, then for stiffening purpose, the top (without teeth) can be bent at an angle of about 90°. The cavity 18 of the slider of the clap-fork's arm 4, used for inserting jag 8, may have a square (fig.8a) or circular section (fig.8b) for allowing the jag respectively its edges, to slide, preferably, easily through it;
The clap-fork 1, preferably, has a spacer 3 provided at its free end with a positioning element 19, the spacer's height is equal to the height of the connecting arm 4, for maintaining, with the help of ring 7 of the coiled spring_5, which may take the shape of a hook (**fig.10**), parallel to jag 8 during operation;
Referring to Figures **fig.7a, 7b, 7c**, these illustrate various possible shapes, generally, of the positioning element 19 of the spacer 3 of the clap-fork, depending on the shape of the section of jag 8. Thus, in fig. 7a, the positining element 19 has, in section, a rectangular shape, and in fig. 7b a rounded shape on the top (shape looks like an ***inversed*** 'U').

**Fig. 7c** presents another embodiment of the positioning element 19 of the clap-fork's spacer. One lateral face of it is elongated and equipped with a threaded hole having a fly-headed screw 25 mounted on a positioning element 19 for blocking the jag 8 during use. In this case of executing the device, the coiled Immobilizing spring 5 is no longer needed.

With reference to **fig.8a**, **fig. 8b**, along its entire length, the slider 18 has an orifice/a cavity used for inserting the rotating jag 8. The slider 18 has also a threaded hole, used for another fly-headed blocking screw 25 and the other end presses on the jag's body, as shown in fig. 8a and 8b.

**Fig. 9** presents another version of self-fastening slider 28, made from a material/metallic strip having a certain degree of elasticity, bent in the shape of an isosceles trapezoid without a large base, having on the congruent lateral surfaces two identical co-axial orifices/holes, preferably, with shape corresponding to the section of jag 8 and slightly longer dimensions, so that by applying a certain force F at the extremities of the lateral surfaces of the self-fastening slider 28, these surfaces shall bend forming a small angle α (3 - 15 degrees) so that the jag 8 may slide/pass through both orifices of the self-fastening slider 28.

In the concrete example of realization, having a jag with a square section, the height 'h' of the square orifices of the self-fastening slider 28 must be slightly larger than the height of the section of jag 8, so that when the jag is manually operated, it may slide through both orifices of the self-fastening slider 28, provided that the extremities have been sufficiently bent/pressed.

Fig.11 presents the device according to invention in open condition and shows how the poultry meat, preferably chicken, is strung on the rotating jag;

The clap-fork 1 covers, preferably, the largest part of the useful length of jag 8 for supporting the meat, as shown in fig. 2 and fig. 12, but may be even shorter than jag 8. Therefore, **fig.10** illustrates a version for executing the device, according to invention, whereby the clap-fork 1 is about half the usable length of jag 8 and the immobilizing ring 7 at the end of coiled spring 5 in the shape of a hook hangs at the middle of jag 8. The minimum length of the clap-fork 1 must be provided as such, to get beyond and fix at least one bird, like a chicken, for example.

## Claims

1. Food impaling and fixing device for cooking purposes **characterized in that** it comprises a clap-fork (1) in the form of a blade having an elongated rectangular shape, equipped on a side with multiple teeth (2,6,12) parallelly aligned to it, said clap-fork (1) being at one end permanently or temporarily mounted on a rotating jag (8), on which the products for being prepared are strung, by means of a connecting arm (4), having it hinged by means of an axis (14), so that it may rotate around this axis, the other end of the clap-fork (1) being equipped with a spacer (3), ended with a positioning element (19) leaning on the jag (8), when the clap-fork (1) is closed and a hole (29) used for inserting a ring being located at the end of a coiled spring (5), another immobilizing ring (7) at the opposite end of said spring is being used for inserting the jag's peak.

2. A device according to claim 1, wherein the number of the teeth of the clap-fork (1) is established so that minimum one tooth corresponds to each piece of meat, preferably the distance between two consecutive tooth is 4 centimetres, the length/height of the teeth (2) of the clap-fork (1) being smaller than the height of the connecting arm (4), which is equal to the height of the spacer (3), so that the teeth do not touch the rotating jag (8), the height of the said connecting arm (4) being established depending on the thickness of the meat pieces to be inserted between the rotating jag (8) and the root (11) of the teeth of the clap-fork (1).

3. A device according to claim 2, wherein the last tooth (12) of the clap-fork (1) is, preferably, smaller than all other teeth and the cross-section of the teeth of the clap-fork (1) may have any of the following shapes: square, triangle, rectangle, round or oval or any other known geometrical shape and the peak (9) of each tooth is sharp/pointed.

4. Device as in claim 1, wherein the clap-fork (1), together with the teeth (2, 6, 12) and the spacer (3) is made of a single metal plate, and wherein the plate from which the clap-fork (1) is made, has a thickness of less than 3 mm, for stiffening, the top of said metal plate is bent at an angle of about 90°.

5. A device according to claim 1, wherein the rotating jag (8) is a rod longer than the clap-fork (1), having a circular or polygonal, preferably, square section, having mounted the connecting arm (4) at the end, which has a supporting/driving roll (17) and a handle (16) made of a thermal insulating material and at the other end it has a peak (15), having a pyramidal shape, the peak (15) and the supporting/driving roll (17) allowing the jag and the whole device to be driven in a rotational movement during the process of preparing the food strung on the rotating jag (8).

6. A device according to claim 1, wherein, the mounting of the clap-fork (1) on the rotating jag (8) may be fix or sliding, in case of the sliding mounting, the connecting arm (4) being equipped with a slider (18, 28) used for inserting the jag (8) and which may be mounted on it.

7. A device according to claim 6, wherein for the sliding mounting of the clap-fork (1) on the rotating jag (8), the connecting arm (4) is equipped with a slider (18) having an orifice with a square or circular section used for inserting the jag (8), which may be fixed using a blocking screw (25) on the rotating jag (8).

8. A device according to claim 6, wherein, for the sliding mounting of the clap-fork (1) on the rotating jag (8), the connecting arm (4) has a self-fastening slider (28), made from a material having a certain degree of elasticity like metallic strip, bent in the shape of an isosceles trapezoid without a large base, having on the congruent lateral surfaces two identical co-axial holes, preferably, in shape of the section of jag (8) and said holes having longer dimensions, so that by applying a certain force (F) at the extremities of lateral surfaces of the self-fastening slider (28), these surfaces shall bend over a small angle (α) between 3-15 degrees , so that the jag (8) may slide/pass through both holes of the self-fastening slider (28).

9. A device according to claim 1, wherein, in a version of executing, the clap-fork (1) has a smaller length than the usable length of the jag (8), for example half, and the immobilizing ring (7) at the end of the coiled spring (5) gets the shape of a hook hanging at the middle of the jag (8).

10. A device according to claim 1, wherein the section of the positioning element (19) of the spacer of the clap-fork (1) has a shape conjugated to the section shape of the jag (8), preferably a rectangular shape.

11. Food impaling and fixing device for cooking **characterized in that** it comprises a clap-fork (1) in the form of a blade having an elongated rectangular shape, equipped on a side with multiple teeth (2,6,12) parallelly aligned to it, said clap-fork (1) being at one end permanently or temporarily mounted on a rotating jag (8), on which the products for being prepared are strung, by means of a connecting arm (4), having it hinged by means of an axis (14), so that it may rotate around this axis, the other end of the clap-fork (1) being equipped with a spacer (3), ended with a positioning element (19) leaning on the jag (8), when the clap-fork (1) is closed, said positioning element (19) having one lateral face of it elongated and being provided with a threaded hole having a fly-headed screw (25) for blocking the jag during use.

## Patentansprüche

1. Eine Vorrichtung zum Aufspießen und Befestigen von zuzubereitenden Lebensmitteln, **dadurch gekennzeichnet, dass** diese eine klappbare Gabel (1) in Form einer Klinge mit einer länglichen rechteckigen Form, die auf einer Seite mit mehreren parallel dazu ausgerichteten Zinken (2,6,12) ausgestattet ist, die besagte klappbare Gabel (1) an einem Ende dauerhaft oder zeitweilig über einen Verbindungsarm (4) an einem die aufgereihten zuzubereitenden Lebensmittel tragenden drehbaren Spieß (8) befestigt ist, an dem diese über eine Achse (14) derart gelenkig angebracht ist, dass sie um diese Achse drehbar ist, das andere Ende der klappbaren Gabel (1) mit einem Abstandhalter (3) versehen ist, an dessen Ende sich ein sich, in geschlossener Stellung der klappbaren Gabel (1), an dem Spieß abstützendes Positionierungselement (19), sowie eine Öffnung (29) befindet, die zum Einsetzen eines am Ende einer Spiralfeder (5) angeordneten Rings dient, und am anderen Ende der Feder ein anderer Festhaltering (7) zum Einführen der Spießspitze zum Einsatz kommt.

2. Eine Vorrichtung gemäß Anspruch 1, wobei die Anzahl der Zinken der klappbaren Gabel (1) so festgelegt ist, dass jedem Fleischstück jeweils wenigstens eine Zinke entspricht, der Abstand zwischen zwei aufeinanderfolgenden Zinken 4 Zentimeter beträgt, die Länge/Höhe der Zinken (2) der klappbaren Gabel (1) kleiner ist als die Höhe des Verbindungsarms (4), welche der Länge des Abstandhalters (3) entspricht, so dass die Zinken den drehbaren Spieß (8) nicht berühren, die Höhe des Verbindungsarms (4) in Abhängigkeit von der Dicke der zwischen dem drehbaren Spieß (8) und der Wurzel (11) der Zinken der klappbaren Gabel (1) einzusetzenden Fleischstücke festgelegt wird.

3. Eine Vorrichtung gemäß Anspruch 2, wobei die letzte Zinke (12) der klappbaren Gabel (1) bevorzugt kleiner ist als alle anderen Zinken und der Querschnitt der Zinken (12) der klappbaren Gabel (1) jeweils eine der Formen: quadratisch, dreieckig, rechteckig, rund oder oval, und die Spitze (9) jedes Zinken zugespitzt ist.

4. Eine Vorrichtung wie in Anspruch 1, wobei die klappbare Gabel (1), zusammen mit den Zinken (2, 6, 12) und dem Abstandhalter (3) einstückig aus einer Metallplatte gefertigt ist, und wobei die Platte, aus der die klappbare Gabel (1) gefertigt ist, eine Dicke unter 3 mm aufweist und der obere Teil der besagten Metallplatte zur Versteifung in einem Winkel von 90° abgewinkelt ist.

5. Eine Vorrichtung gemäß Anspruch 1, wobei der drehbare Spieß (8) ein Stab größerer Länge als die Klappgabel (1) mit einem kreisförmigen oder vieleckigen, bevorzugt quadratischen Querschnitt ist, an dessen Ende der Verbindungsarm (4) befestigt ist, der eine Abstütz-/Antriebsrolle (17) und einen aus einem thermisch isolierenden Material gefertigten Griff (16) aufweist und am anderen Ende eine pyramidenförmige Spitze (15) hat, und die Spitze (15) und die Abstütz-/Antriebsrolle (17) es ermöglichen, den Spieß und die gesamte Vorrichtung während des Zubereitungsvorgangs die auf dem Spieß (8) aufgereihten Lebensmittel in eine Drehbewegung zu versetzen.

6. Eine Vorrichtung gemäß Anspruch 1, wobei die Anbringung der klappbare Gabel (1) an dem Spieß (8) fest oder geführt/gleitend sein kann, im Fall der geführten Anbringung, der Verbindungsarm (4) mit einem zum Einführen des Spießes (8) dienenden Gleitstück (18, 28) versehen ist, welches daran montiert werden kann.

7. Eine Vorrichtung gemäß Anspruch 6, wobei zur geführten Anbringung der klappbaren Gabel (1) an dem drehbaren Spieß (8), der Verbindungsarm (4) mit einem Gleitstück (18) versehen ist, das eine Öffnung mit quadratischem oder rundem Querschnitt besitzt, die zur Einführung des Spießes (8) dient, welcher unter Verwendung einer Feststellschraube/Blockierschraube (25) an dem drehbaren Spieß (8) festgelegt werden kann.

8. Eine Vorrichtung nach Anspruch 6, wobei, für die Gleitbefestigung der klappbaren Gabel (1) an dem drehbaren Spieß (8), der Verbindungsarm (4) einen selbstbefestigenden Schieber (28) aufweist, der aus einem Material mit einem bestimmten Elastizitätsgrad, wie Metallstreifen, hergestellt ist, der in Form eines gleichschenkligen Trapezes ohne große Basis gebogen ist, und auf den kongruenten Seitenflächen zwei identisch koaxial Löchern vorzugsweise in Form des Abschnitts des drehbaren Spießes (8) hat, und diese Löcher haben längere Abmessungen, so dass sich diese Flächen durch Aufbringen einer bestimmten Kraft (F) an den Enden der Seitenflächen des selbstbefestigenden Schiebers (28) über einen kleinen Winkel (α) zwischen 3 und 15 Grad biegen müssen, dass der drehbare Spieß (8) durch beide Löcher des selbstbefestigenden Schiebers (28) gleiten kann.

9. Eine Vorrichtung gemäß Anspruch 1, wobei in einer Ausführungsform die klappbare Gabel (1) eine geringere Länge hat als die brauchbare Länge des Spießes (8), zum Beispiel die Häfte davon, und der Feststellring (7) am Ende der Spiralfeder (5) die Form eines mittig an dem Spieß (8) hängenden Hakens annimmt.

10. Eine Vorrichtung gemäß Anspruch 1, wobei der Querschnitt des Positionierungselements (19) des Abstandhalters der klappbaren Gabel (1) eine zur Querschnittsform des Spießes (8) konjugierte Form hat, bevorzugt eine rechteckige Form.

11. Vorrichtung zum Aufspießen und Befestigen von zuzubereitenden Lebensmitteln, **dadurch gekennzeichnet, dass** diese eine klappbare Gabel (1) in Form einer Klinge mit einer länglichen rechteckigen Form, die auf einer Seite mit mehreren parallel dazu ausgerichteten Zinken (2,6,12) ausgestattet ist, die besagte klappbare Gabel (1) an einem Ende dauerhaft oder zeitweilig über einen Verbindungsarm (4) an einem die aufgereihten zuzubereitenden Lebensmittel tragenden drehbaren Spieß (8) befestigt ist, womit diese über eine Achse (14) derart gelenkig verbunden ist, dass sie um diese Achse drehbar ist, das andere Ende der klappbaren Gabel (1) mit einem Abstandhalter (3) versehen ist, an dessen Ende sich ein, in geschlossener Stellung der klappbaren Gabel (1), an dem Spieß sich abstützendes Positionierungselement (19), befindet, eine der Seitenflächen des Positionierungselements (19) länger und mit einer Gewindebohrung versehen ist, die eine Flügelschraube (25) zum Blockieren des Spießes aufnimmt.

## Revendications

1. Dispositif d'empalage et de fixation d'aliments à des fins de cuisson **caractérisé en ce qu'**il comprend une fourchette à charnière (1) en forme de lame de forme rectangulaire allongée, équipée d'un côté à plusieurs dents (2,6,12) alignées parallèlement à celui-ci, ladite fourchette à clapet (1) étant montée à une extrémité de façon permanente ou temporaire sur une tige rotative (8), sur laquelle les produits à préparer sont enfilés, au moyen d'un bras de liaison (4), le faisant articuler des moyens d'un axe (14), de sorte qu'il puisse tourner autour de cet axe, l'autre extrémité de la fourchette à clapet (1) étant équipée d'une entretoise (3), terminée par un élément de positionnement (19) s'appuyant sur la tige rotative (8), lorsque la fourchette à charnière (1) est fermé, et qu'un trou (29) utilisé pour insérer une bague étant situé à l'extrémité d'un ressort hélicoïdal (5), une autre bague d'immobilisation (7) à l'extrémité opposée dudit ressort est utilisé pour insérer l'extrémité de la tige rotative (8).

2. Dispositif selon la revendication 1, dans lequel le nombre de dents de la fourchette à charnière (1) est établi de telle sorte qu'au minimum une dent correspond à chaque morceau de viande, de préférence la distance entre deux dents consécutives est de 4 centimètres, la longueur des dents (2) de la fourchette à charnière (1) étant inférieure à la hauteur du bras de liaison (4), qui est égale à la hauteur de l'entretoise (3), de sorte que les dents ne touchent pas la tige rotative (8), la hauteur dudit bras de liaison (4) étant établie en fonction de l'épaisseur des morceaux de viande à insérer entre la tige rotative (8) et le pied (11) des dents de la fourchette à charnière (1).

3. Dispositif selon la revendication 2, dans lequel la dernière dent (12) de la fourchette à charnière (1) est, de préférence, plus petite que toutes les autres dents et la section transversale des dents de la fourchette à charnière (1) peut avoir l'une des formes suivantes: carré, triangle, rectangle, rond ou ovale et le pic (9) de chaque dent est pointu.

4. Dispositif selon la revendication 1, dans lequel la fourchette à charnière (1), conjointement avec les dents (2, 6, 12) et l'entretoise (3) est constitué d'une seule plaque métallique, et dans lequel la plaque à partir de laquelle la fourchette à charnière (1) est réalisée, a une épaisseur inférieure à 3 mm, pour le rigidifier, le dessus de ladite plaque métallique est plié sous un angle d'environ 90° (degrés).

5. Dispositif selon la revendication 1, dans lequel la tige rotative (8) est une tige plus longue que la fourchette à charnière (1), ayant une section circulaire ou polygonale, de préférence carrée, ayant monté le bras de liaison (4) au niveau du extrémité, qui a un rouleau de support / d'entraînement (17) et une poignée (16) en un matériau isolant thermique et à l'autre extrémité il a une pointe (15), ayant une forme pyramidale, la point (15) et le support/rouleau d'entraînement (17) permettant d'entraîner la denture et l'ensemble du dispositif dans un mouvement de rotation pendant le processus de préparation de l'aliment enfilé sur la tige rotative (8).

6. Dispositif selon la revendication 1, dans lequel, le montage de la fourchette de charnière (1) sur la tige rotative (8) peut être fixe ou coulissant, en cas de montage coulissant, le bras de liaison (4) étant équipé d'un glisseur (18, 28) utilisé pour insérer la tige rotative (8) et qui peut être monté sur celle-ci.

7. Dispositif selon la revendication 6, dans lequel pour le montage coulissant de la fourchette à charnière (1) sur la tige rotative (8), le bras de liaison (4) est équipé d'un glisseur (18) présentant un orifice à carré ou section circulaire utilisée pour insérer la tige rotative (8), qui peut être fixée à l'aide d'une vis de blocage (25) sur la tige rotative (8).

8. Dispositif selon la revendication 6, dans lequel, pour le montage coulissant de la fourchette à charnière (1) sur la tige rotative (8), le bras de liaison (4) présente un glisseur auto-agrippant (28), réalisé à partir d'un matériau ayant un certain degré d'élasticité comme une bande métallique, plié en forme de trapèze isocèle sans grande base, ayant sur les surfaces latérales congruentes deux trous coaxiaux identiques, de préférence, en forme de section de tige rotative (8) et lesdits trous ayant des dimensions plus longues, de sorte qu'en appliquant une certaine force (F) aux extrémités des surfaces latérales du glisseur auto-agrippant (28), ces surfaces doivent se plier sur un petit angle (α) entre 3-15 degrés, de sorte en ce que la tige rotative (8) peut coulisser/passer à travers les deux trous du glisseur auto-agrippant (28).

9. Dispositif selon la revendication 1, dans lequel, dans une version d'exécution, la fourchette à charnière (1) a une longueur inférieure à la longueur utilisable de la tige rotative (8), par exemple la moitié, et de la bague d'immobilisation (7) à l'extrémité du ressort hélicoïdal (5) prend la forme d'un crochet suspendu au milieu de la tige rotative (8).

10. Dispositif selon la revendication 1, dans lequel la section de l'élément de positionnement (19) de l'entretoise de la fourchette à charnière (1) a une forme conjuguée à la forme de section de la tige rotative (8), de préférence une forme rectangulaire.

11. Dispositif d'empalage et de fixation d'aliments pour la cuisson **caractérisé en ce qu'**il comprend une fourchette à charnière (1) en forme de lame de forme rectangulaire allongée, équipée d'un côté à dents multiples (2,6,12) alignées parallèlement à elle, ladite fourchette à charnière (1) étant à une extrémité montée de façon permanente ou temporaire sur une tige rotative (8), sur laquelle les produits à préparer sont enfilés, au moyen d'un bras de liaison (4), la faisant pivoter par des moyens d'un axe (14), de sorte qu'il puisse tourner autour de cet axe, l'autre extrémité de la fourchette à charnière (1) étant équipée d'une entretoise (3), terminée par un élément de positionnement (19) s'appuyant sur la tige (8)), lorsque la fourchette à charnière (1) est fermée, ledit élément de positionnement (19) ayant une face latérale de celui-ci est allongé et pourvu d'un trou fileté ayant une vis à tête mouche (25) pour bloquer la tige rotative (8) pendant l'utilisation.
